# EUROPÄISCHE PATENTANMELDUNG

(11) **EP 0 746 983 A2**
(43) Veröffentlichungstag der Anmeldung: **11.12.1996**
(21) Anmeldenummer: 96106070.4
(22) Anmeldetag: 18.04.1996
(51) Int. Cl.: A21C 13/02

(54) **Gärkammer mit Einrichtungen für den kettenlosen Transport von Gärleisten und Betriebsverfahren hierfür**

(30) Priorität: 19.05.1995 DE 19518415
(71) Anmelder: DEBAG Deutsche Backofenbau GmbH, 02625 Stiebitz (DE)
(72) Erfinder: Jeremias, Frank, D-02625 Bautzen (DE)
(74) Vertreter: Zapfe, Hans, Dipl.-Ing.

(57) **Zusammenfassung**

Eine Gärkammer (1) zum Vorgären besitzt Gärleisten (5, 5a) für die Aufnahme von Teiglingen, Einrichtungen für den kettenlosen Transport der Gärleisten (5, 5a) in horizontalen und vertikalen Richtungen, eine Beschickungsstation (2), ein Gärmagazin (8), eine Formstation (17), eine Wendestation und einem Entnahmebereich (25) für die Teiglinge. Zur Verringerung der Baugröße und zur Steigerung des Durchsatzes ist der Entnahmebereich (25) innerhalb der Gärkammer (1) angeordnet. Ferner ist dem Entnahmebereich (25) eine Transport- und Wendeeinrichtung (19) für den Horizontaltransport und das Wenden mehrerer Gärleisten (5, 5a) zugeordnet, und darunter ist eine Auffangvorrichtung (20) für die gleichzeitige Ablage mehrerer Reihen von Teiglingen angeordnet. Vorzugsweise besitzt die Transport- und Wendeeinrichtung (19) zwei parallele Reihenanordnungen von drehbaren Greifbacken, die in einem Rastermaß angeordnet und in Führungskörper an den Enden der Gärleisten (5, 5a) einschiebbar sind. Dabei sind die Greifbacken um Schrittlängen hin und her bewegbar, die dem Rastermaß entsprechen, das größer ist als der minimale Achsabstand zweier benachbarter Gärleisten (5, 5a).

## Beschreibung

Die Erfindung betrifft eine Gärkammer mit einer Gärzone zum Vorgären mit gestapelten Gärleisten für die Aufnahme von Teiglingen, insbesondere für die Herstellung von Brötchen, mit Einrichtungen für den kettenlosen, taktweisen Transport der Gärleisten in horizontalen und vertikalen Richtungen, mit einer Beschickungsstation, einem Gärmagazin für mehrere Zeilen und Säulen von Gärleisten, einer Formstation, einer Wendestation und einem Entnahmebereich für die Teiglinge.

Durch die AT-PS 391 402 ist eine Anlage zum Vorgären, Formen und Nachgären portionierter Teigstücke bekannt, bei der der Transport der Gärleisten durch ein endloses, mäanderförmig umlaufendes Kettengehänge erfolgt, in das die Gärleisten fest aber drehbar eingehängt sind. Die relativen Verweilzeiten in der Vor- und Nachgärzone werden dabei durch drei Maßnahmen bestimmt, nämlich erstens durch die relativen Teillängen der Kettengehänge in beiden Zonen, zweitens durch einen umschaltbaren Transportweg über eine Formstation und ein Ablegeband und drittens durch die Anzahl von mehr als zwei Umläufen. In einer Absetzstation können durch Reibräder gleichzeitig mehrere Gärleisten gewendet und dadurch gleichzeitig mehrere Reihen von bereits nachgegorenen Teigportionen auf eine innerhalb der Anlage befindliche Ablage, z.B. auf ein Backblech, abgelegt werden. Die relativen Teillängen des Kettengehänges, die zwischen 2:1 und 1,4:1 betragen sollen, und die Anzahl der Gärleisten können jedoch ohne Umbau der Anlage nicht verändert werden. Die Umschalteinrichtung für den Transportweg, eine Art Weiche, ist eine aufwendige Einrichtung. Bei mehreren Umläufen der Teigportionen sind Beschickung und Entnahme unterbrochen, und die sogenannte Kopfmaschine kann erst wieder im Betrieb genommen werden, wenn die letzte Teigportion die Anlage verlassen hat, damit sich nicht Teigportionen mit unterschiedlichen Verweilzeiten in der Anlage befinden. Der Kettentransport erzwingt ein größeres Bauvolumen, die zahlreichen Umlenkräder und die Gelenkstellen innerhalb der Ketten selbst bilden Schmierstellen und sind daher ausgesprochene Schmutzfänger für Mehl und Teigreste und können ohne Demontage nicht gereinigt werden. Dadurch verlieren auch die Reibradantriebe allmählich ihre Funktion.

Bei einer durch die DE 42 15 146 A1 und die WO 93/22927 bekannten Gärkammer der eingangs beschriebenen Gattung befinden sich die Wendestation und der Entnahmebereich außerhalb der Gärkammer bzw. an der Nahtstelle zwischen der Gärkammer und einem Gärwagen für die Fortsetzung des Gärvorgangs. Die Wendestation ist hierbei auch nur für den Abwurf einer einzigen Reihe von Teiglingen vorgesehen. Die Auffangvorrichtung ist dabei bereits Teil des Gärwagens, der zu diesem Zweck eine Vielzahl anders geformter Gärleisten und ebenso viele weitere Wendestationen aufweist, unter denen Backbleche einschiebbar sind. Die Verweilzeit zwischen den beiden Wendevorgängen dient zur Fixierung der in der Formstation erzeugten "Stüpfelung". In der Praxis benötigt man hierzu mindestens vier Gärwagen mit allen Wendestationen zum Nachgären, um einen kontinuierlichen Produktionsfluß zu gewährleisten. Diese Gärwagen müssen sehr exakt an ortsfeste Wendeantriebe angedockt werden und bedingen einen großen Platzbedarf. Sie sind wegen der vielen Drehlager und der horizontalen und vertikalen Verschiebeantriebe für das Umsetzen der zweiten Gärleisten sehr aufwendig konstruiert und entsprechend teuer in der Anschaffung und im Betrieb. Außerdem müssen die Backbleche sehr genau positioniert werden und dürfen keine übermäßigen Toleranzen, insbesondere keine betriebsbedingten Verformungen aufweisen.

Die gattungsgemäße Vorrichtung zeichnet sich durch den Wegfall von Antriebsketten bereits durch eine außerordentlich einfache Konstruktion und einen geringen Raumbedarf aus, obwohl ein Magazin mit einem ganzen Paket entleerter Gärleisten einen beträchtlichen Teil des Innenvolumens der Gärkammer in Anspruch nimmt.

Der Erfindung liegt infolgedessen die Aufgabe zugrunde, eine Vorrichtung der bekannten Art noch kompakter auszubilden und den Einsatz mehrerer nachgeschalteter Gärwagen mit zugehörigen Wendeantrieben und Verschiebeantrieben zu vermeiden, sowie die Produktionsgeschwindigkeit zu erhöhen.

Die Lösung der gestellten Aufgabe erfolgt bei der eingangs beschriebenen kettenlosen Gärkammer zum Vorgären, erfindungsgemäß dadurch, daß
a) der Entnahmebereich innerhalb der Gärkammer angeordnet ist,
b) dem Entnahmebereich eine Transport- und Wendeeinrichtung für den gleichzeitigen Horizontaltransport und das gleichzeitige Wenden mehrerer Gärleisten zugeordnet ist,
c) unterhalb der Transport- und Wendeeinrichtung eine Auffangvorrichtung für die gleichzeitige Ablage mehrerer Reihen von Teiglingen angeordnet ist,
d) die Transport- und Wendeeinrichtung zwei parallele Reihenanordnungen von aufeinander zu gerichteten Greifbacken aufweist, die in einem Rastermaß angeordnet und mittels einer Antriebseinheit formschlüssig mit den Enden der Gärleisten verbindbar und mittels eines Drehantriebs gemeinsam mit den Gärleisten um quer zur Transportrichtung verlaufende Drehachsen drehbar sind, und daß
e) die Reihenanordnungen von Greifbacken durch die Antriebseinheit zum schrittweisen Transport der Gärleisten gemeinsam um dem Rastermaß entsprechende Schrittlängen in Transportrichtung hin und her bewegbar sind.

Dadurch, daß die Transport- und Wendeeinrichtung gleichzeitig mehrere Gärleisten wendet und unterhalb derselben eine Auffangvorrichtung für die gleichzeitige Ablage mehrerer Reihen von Teiglingen angeordnet ist, läßt sich der Aufwand erheblich verringern. Diese Maßnahme ist in Verbindung damit zu sehen, daß der Entnahmebereich innerhalb der Gärkammer angeordnet ist, so daß eine genaue Ausrichtung auf angeschlossene Aggregate und eine Synchronisation hiermit entweder entfällt oder zumindest erleichtert wird.

Die Auffangvorrichtung kann dabei unterschiedlich gestaltet sein: Es kann sich entweder um einen Sturzkasten oder ein Backblech für eine diskontinuierliche Entnahme, oder aber auch ein endloses Transportband für eine quasi-kontinuierliche Entnahme handeln. Mittels der Auffangvorrichtung kann die Fertiggärung erfolgen, an deren Ende der zweite Wendevorgang durchgeführt wird. Dieser zweite Wendevorgang ist jedoch nicht mehr Gegenstand der vorliegenden Erfindung. Die Fertiggärung kann dabei in einfachen "Stikkenwagen" ohne eigene Wendelager, Wendeantriebe und Verschiebeantriebe durchgeführt werden.

Durch die Merkmale d) und e) wird aus einer senkrechten Säule von Gärleisten jeweils die unterste Gärleiste herausgezogen, und zwar durch diejenigen beiden Greifbacken, die am Anfang der Transport- und Wendeeinrichtung angeordnet sind. Nach dem Stillstand der Greifbacken am Ende eines Transportschritts wird die Garleiste bzw. werden die bereits von der Transport- und Wendeeinrichtung aufgenommenen Gärleisten auf einer Unterlage stillgesetzt, die Greifbacken auseinandergezogen und um die gleiche Schrittlänge zurückgefahren und die nächste Gärleiste wird aus der Säule entnommen, bis alle Greifbacken paarweise zwischen sich je eine Gärleiste mit den Teiglingen tragen. Ein Verkanten bzw. Schiefstellen der Gärleisten ist durch deren Zwangsführung nicht möglich. Jetzt werden sämtliche Gärleisten gleichzeitig um 360 Grad gedreht, wobei die einzelnen Reihen von Teiglingen gleichzeitig auf die Auffangvorrichtung abgekippt werden.

Gegenüber einem Kettentransport der bekannten Art fällt beim Erfindungsgegenstand der größte Teil der Gelenk- und Umlenkelemente und damit der Schmutzfänger weg. Die relativen Verweilzeiten können durch Hinzufügen oder Wegnehmen von Gärleisten, vorzugsweise aus dem Bereich der Transport- und Wendeeinrichtung, problemlos verändert werden, und die verschmutzten Gärleisten können herausgenommen und einem Waschvorgang zugeführt werden, ohne daß eine einzige Schraube gelöst werden müßte. Der Wegfall der Kettenführung allein hätte allerdings ein anderes Problem zur Folge, nämlich das Schiefstellen bzw. Verkanten der Gärleisten, insbesondere im Bereich der Transport- und Wendeeinrichtung, wodurch der kontinuierliche Prozeß zum Erliegen käme.

Durch den erfindungsgemäßen zeitweisen formschlüssigen Eingriff der Greif backen in die Gärleisten werden etwa schräg stehende Gärleisten stets parallel zueinander und rechtwinklig zur Transportrichtung ausgerichtet und ausgerichtet gehalten bzw. geführt, und ein Gleiten von nicht vorhandenen Reibrädern durch Verschmutzung ist ausgeschlossen, so daß auch eine unterschiedliche Winkelstellung der einzelnen Gärleisten beim Wendevorgang unterbleibt. Dies wäre beim Kettentransport weitgehend unerheblich, würde aber beim Wegfall der Ketten einen Weitertransport unmöglich machen.

Es ist dabei besonders vorteilhaft, wenn das besagte Rastermaß größer ist als der minimale Achsabstand zweier benachbarter Gärleisten. Auf diese Weise kann zum einen verhindert werden, daß sich die Gärleisten beim Kippen behindern, zum anderen kann erreicht werden, daß die Teiglinge auf der Auffangvorrichtung einen größeren Reihenabstand voneinander haben, als dies den Abmessungen der Gärleisten entspricht. Hierdurch kann in sehr einfacher Weise der Volumensvergrößerung der Teiglinge beim Gärprozeß Rechnung getragen werden. Besonders hierbei ist die Zwangsführung der Gärleisten durch die Greifbacken von Bedeutung, denn beim Vorhandensein eines Abstandes zwischen benachbarten Gärleisten, könnten sich diese schiefstellen oder unterschiedliche Abstände zueinander einnehmen. Durch die erfindungsgemäße Maßnahme wird der Abstand der Gärleisten nur vorübergehend vergrößert, und im Anschluß daran werden die Gärleisten wieder zusammengeschoben, können also in einem kleinstmöglichen Volumen untergebracht werden.

Es ist dabei im Zuge einer wiederum weiteren Ausgestaltung der Erfindung besonders vorteilhaft, wenn in einer Ebene unterhalb der Greifbacken zwei waagrechte Gleitschienen für die Auflage der Führungskörper der Gärleisten angeordnet sind, und wenn die Gleitschienen zur Ausführung der Drehbewegung der Gärleisten vorübergehend um ein Maß H absenkbar sind, das die Drehbewegung der Gärleisten ermöglicht.

Es ist dabei weiterhin von Vorteil, wenn unterhalb der Transport- und Wendeeinrichtung ein Gärmagazin für mehrere Zeilen und Säulen von gefüllten Gärleisten angeordnet ist. Es handelt sich also wohlgemerkt nicht um ein Magazin für leere Gärleisten, sondern ein Magazin, in dem bei gegebener Luftfeuchtigkeit und Temperatur der Gärprozeß - mindestens teilweise - durchgeführt wird.

Unter dem Ausdruck "Zeile" wird jeweils eine waagrechte Reihenanordnung von Gärmagazinen verstanden, und unter dem Ausdruck "Säule" ein senkrechter Einzelstapel von Gärleisten.

Es ist dabei weiterhin von Vorteil, wenn an beiden Längsseiten des Gärmagazins je eine Hub- und Absenkeinrichtung für den Eingriff in die jeweils vorletzte Zeile der Gärleisten angeordnet ist.

Hierdurch kann das aus mehreren Zeilen und Säulen bestehende Paket von Gärleisten mit Ausnahme der jeweils untersten Zeile angehoben werden, so daß diese unbelastet von dem darüberliegenden Paket aus Gärleisten schrittweise ausgeschoben werden kann, d.h. es entstehen lediglich Reibungskräfte, die durch das Gewicht der einzelnen Gärleiste und deren Füllung mit Teiglingen bedingt sind.

Der Ausschub der untersten Zeile von Gärleisten geschieht dabei in besonders einfacher Weise dadurch, daß unterhalb des Gärmagazins eine waagrecht wirkende Vorschubeinrichtung für den schrittweisen Transport der jeweils untersten Zeile der Gärleisten unter eine Säule von Gärleisten angeordnet ist.

Es ist wiederum von Vorteil, wenn zwischen der Transport- und Wendeeinrichtung und dem Gärmagazin ein von den Gärleisten von oben nach unten U-förmig umfahrener Raum vorhanden ist, in dem sich die Auffangvorrichtung für die abgekippten Teiglinge, eine Entkeimungsstation und eine Trocknungsstation befinden. Die Symmetrieachse des "U" liegt dabei waagrecht.

Die Erfindung betrifft auch ein Betriebsverfahren für die erfindungsgemäße Gärkammer. Zur Lösung der gleichen Aufgabe ist dieses Betriebsverfahren erfindungsgemäß dadurch gekennzeichnet, daß
a) Reihen von Teiglingen in der Beschickungsstation nacheinander in eine jeweils oberste Gärleiste eingegeben werden,
b) die gefüllten Gärleisten nacheinander dem Gärmagazin zugeführt und in diesem zeilenweise gestapelt werden,
c) der Inhalt des Gärmagazins zeilenweise abgesenkt wird,
d) die jeweils unterste Zeile der Gärleisten schrittweise dem unteren Ende einer Säule von Gärleisten zugeführt wird,
e) die besagte Säule schrittweise angehoben und seitlich an der Transport- und Wendeeinrichtung vorbei nach oben geführt wird,
f) die Gärleisten in eine obere waagrechte Zeile umgesetzt werden und innerhalb dieser Zeile unter einer Formstation hindurchgeführt werden,
g) die Gärleisten durch die Transport- und Wendeeinrichtung waagrecht abgezogen und über die Auffangvorrichtung geführt werden,
h) die über der Auffangvorrichtung befindlichen Gärleisten gleichzeitig gekippt, entleert und wieder aufgerichtet werden, und
i) die entleerten Gärleisten zunächst einer sich schrittweise abwärts bewegenden weiteren senkrechten Säule zugeführt und an deren unterem Ende wieder der Beschickungsstation und danach dem Gärmagazin zugeführt werden.

Weitere vorteilhafte Ausgestaltungen des Erfindungsgegenstandes ergeben sich aus den übrigen Unteransprüchen.

Zwei Ausführungsbeispiele des Erfindungsgegenstandes werden nachfolgend anhand der Figuren 1 bis 21 näher beschrieben.

Es zeigen:
- Figur 1: eine Seitenansicht eines ersten Ausführungsbeispiels einer Gärkammer mit abgenommener Seitenwand und Draufsicht auf die Enden der Gärleisten und Blickrichtung senkrecht zur Transportrichtung der Gärleisten,
- Figur 2: einen senkrechten Längsschnitt durch eine Gärleiste mit Blickrichtung in Transportrichtung,
- Figur 3: eine Draufsicht auf einen am Ende der Gärleiste angeordneten Führungskörper in Richtung des Pfeils III in Figur 2,
- Figur 4: das linke Ende von Figur 2 in vergrößertem Maßstab mit einer in den Führungskörper eingeschobenen Greifbacke einer Transporteinrichtung nach den Figuren 7, 8 und 9,
- Figur 5: eine Stirnansicht der Greifbacke nach Figur 4 in Richtung des Pfeils V in Figur 6,
- Figur 6: eine Draufsicht auf die Greifbacke nach Figur 5 in Richtung des Pfeils VI,
- Figur 7: eine teilweise Innenansicht einer Transport- und Wendeeinrichtung mit zehn auf einer Seite angeordneten Greifbacken nach den Figuren 4, 5 und 6 ohne Gärleisten,
- Figur 8: eine Draufsicht auf die Transport- und Wendeeinrichtung nach Figur 7, gleichfalls ohne Gärleisten, in Richtung des Pfeils VIII mit allen zwanzig Greifbacken,
- Figur 9: eine Draufsicht auf die Transport- und Wendeeinrichtung nach Figur 8 ohne Antriebseinheit und außer Eingriff mit den Gärleisten,
- Figur 10: eine Seitenansicht eines Pneumatikantriebs für den Horizontaltransport der Gärleisten,
- Figur 11: den unteren Teil von Figur 1 vergrößert und mit eingezeichneter Hub- und Absenkeinrichtung für ein ganzes Paket von Gärleisten,
- Figur 12: die Blechabwicklung eines Halterechens für die Absenkeinrichtung nach Figur 11,
- Figur 13: die linke Hälfte eines Vertikalschnitts durch den Gegenstand von Figur 11 entlang der Linie XIII in vergrößertem Maßstab und ohne Eingriff des Halterechens nach Figur 12 in eine Gärleisten-Zeile,
- Figur 14: einen Ausschnitt aus Figur 13 in wiederum vergrößertem Maßstab, jedoch mit Eingriff des Halterechens nach Figur 12 in eine Gärleisten-Zeile,
- Figur 15: den unteren Teil von Figur 1 mit eingezeichneter Vorschubeinrichtung für den schrittweisen Vorschub einer ganzen Zeile von Gärleisten unter eine Säule aus einzelnen Gärleisten,
- Figur 16: einen Schnitt durch den Gegenstand von Figur 15 entlang der Linie XVI-XVI,
- Figur 17: die rechte untere Ecke von Figur 1 in vergrößertem Maßstab und mit eingezeichnetem Hubantrieb für eine Säule aus einzelnen Gärleisten,
- Figur 18: eine Frontalansicht des Gegenstandes von Figur 17 in Richtung des Pfeils XVIII,
- Figur 19: eine Halteeinrichtung für die Gärleistensäule nach den Figuren 17 und 18,
- Figur 20: die rechte obere Ecke von Figur 1 in vergrößertem Maßstab und mit einer eingezeichneten Horizontal-Verschiebeeinrichtung für die jeweils oberste Gärleiste der Gärleistensäule nach den Figuren 17 und 18, und
- Figur 21: eine Prinzipdarstellung eines zweiten Ausführungsbeispiels analog Figur 1.

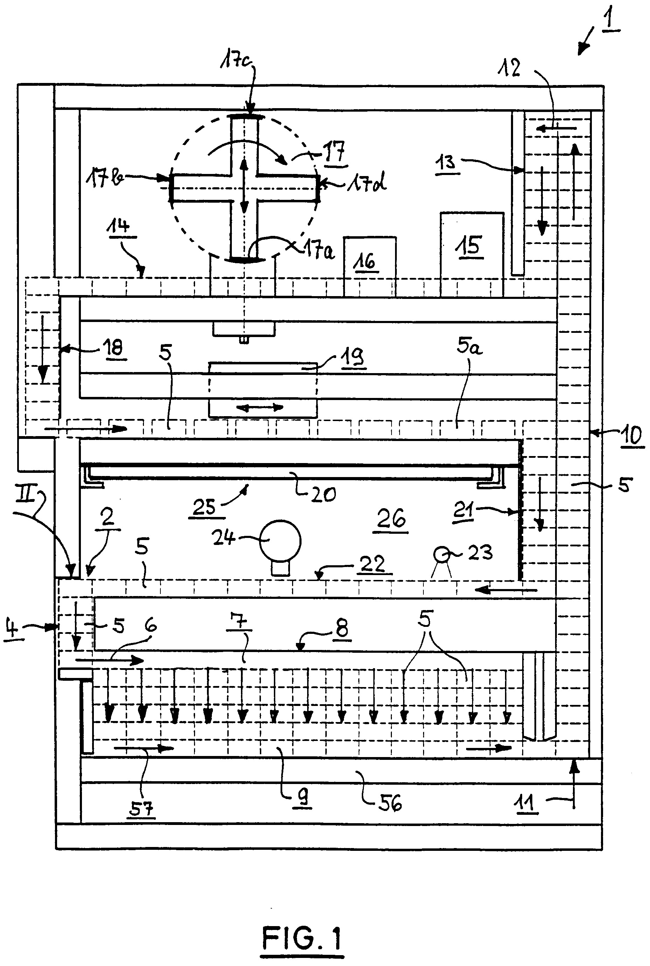

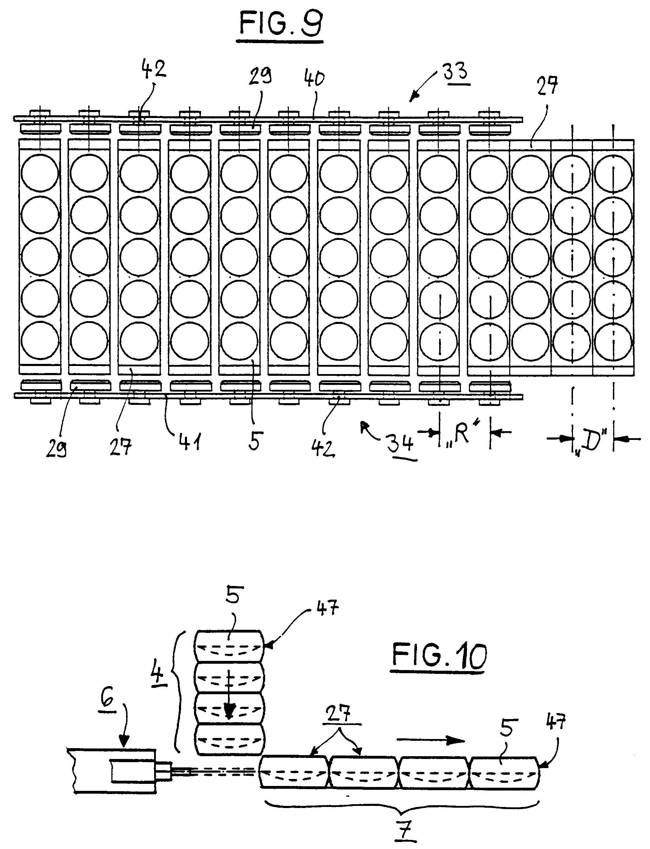

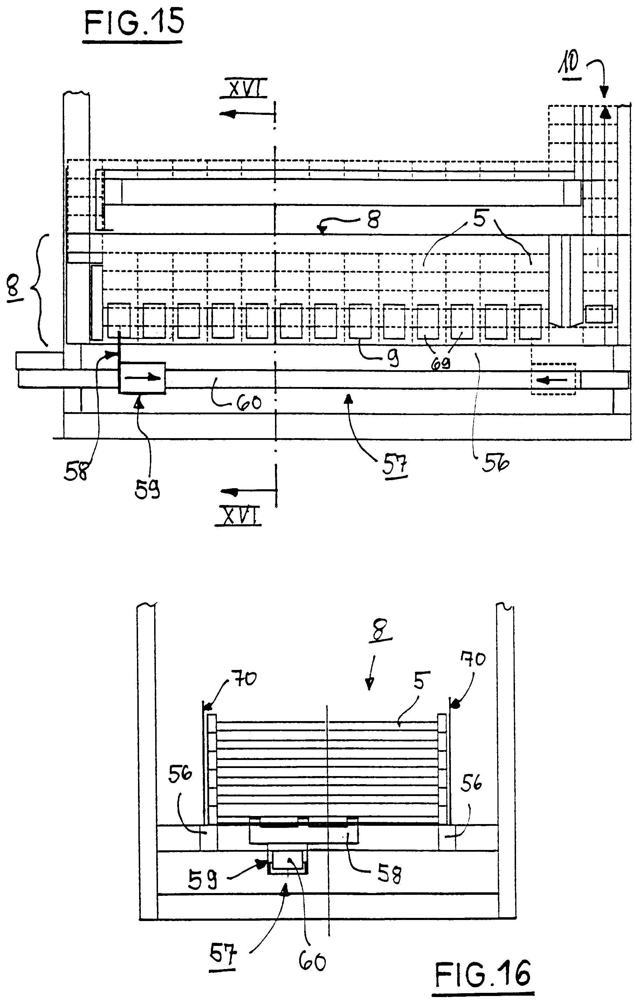

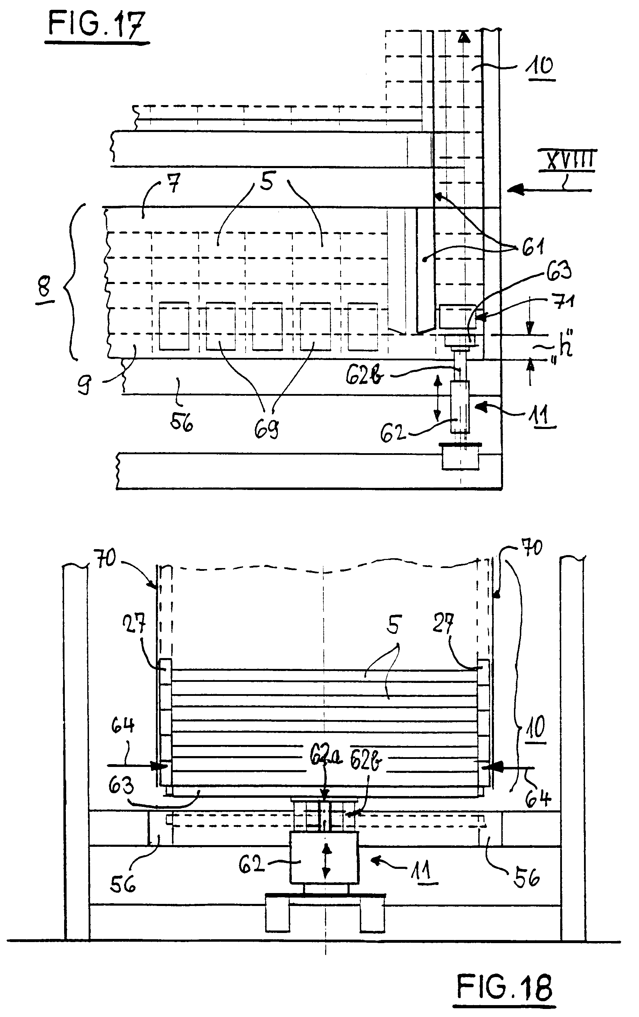

In Figur 1 ist eine Gärkammer 1 dargestellt, die im Betriebszustand zumindest weitgehend allseitig geschlossen ist. Dieser Gärkammer ist eine hier nicht gezeigte Kopfmaschine vorgeschaltet, die im Stande ist, mit einer vorgegebenen Taktfrequenz die geforderte Anzahl von Teigportionen, sogenannten "Teiglingen", vorzugeben, die in eine Beschickungsstation 2 in Richtung des Pfeils II eingegeben werden. Im vorliegenden Fall handelt es sich um fünf gleichzeitig abgegebene Teiglinge. Von der Beschickungsstation 2 führt eine erste Säule 4 von aufeinander gestapelten Gärleisten 5 nach unten bis zu einem Gärmagazin 8, und zwar werden die einzelnen Gärleisten 5 durch einen Horizontalantrieb 6 eingeschoben, wie er hinsichtlich seiner Wirkungsweise in Figur 10 dargestellt ist. Dieser Vorgang erfolgt bis zum Auffüllen einer Zeile 7 durch insgesamt dreizehn Gärleisten 5. In der gleichen Zeit wird eine unterste Zeile 9 durch einen werteren Horizontalantrieb, der anhand der Figuren 15 und 16 noch näher erläutert werden wird, schrittweise in eine zweite Säule 10 umgesetzt, und zwar mittels eines Hubantriebs 11, der anhand der Figuren 17 und 18 noch näher erläutert werden wird.

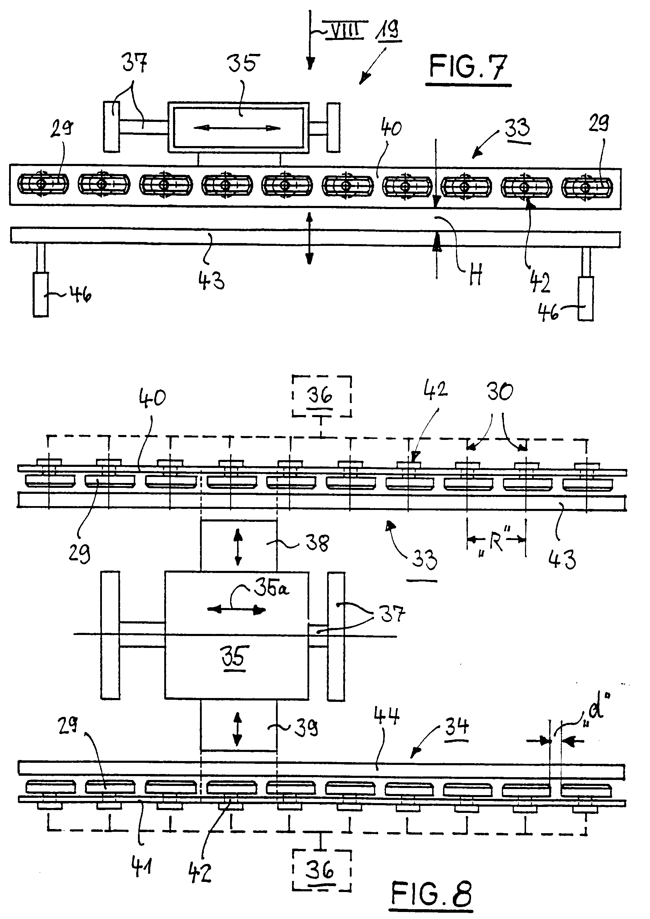

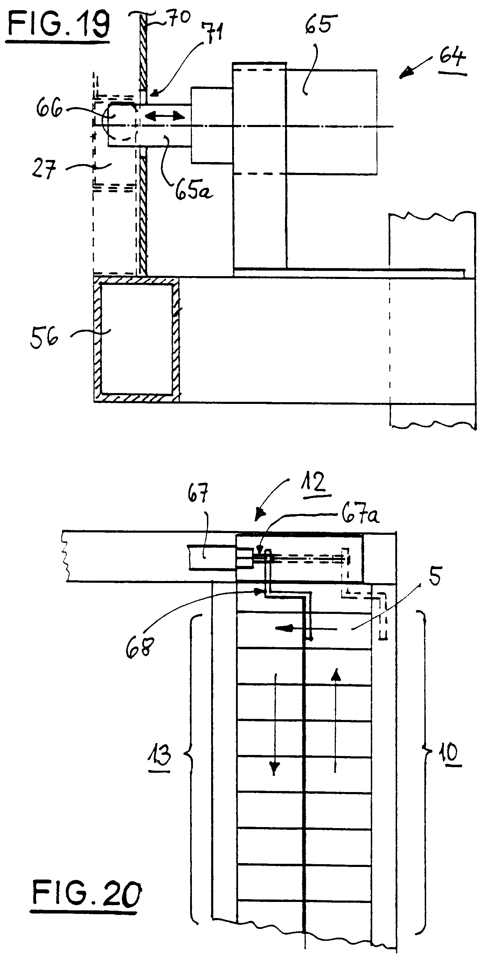

Am oberen Ende der zweiten Säule 10 befindet sich eine Horizontal-Verschiebeeinrichtung 12, die in Figur 20 im einzelnen dargestellt ist. Von hier führt eine dritte Säule 13 von Gärleisten 5 abwärts. Am unteren Ende der dritten Säule 13 werden die Gärleisten 5 in eine obere waagrechte Zeile 14 umgesetzt und innerhalb dieser Zeile 14 zunächst unter einem Lüfter 15 und einem Mehler 16 hindurchgeführt sowie unter einer Formstation 17, die als sogenannter "Stüpfler" mit vier Formwerkzeugen 17a, 17b, 17c und 17d ausgebildet und heb- und senkbar sowie drehbar ist. Derartige Stüpfler sind bekannt und werden daher nicht näher erläutert. Am Ende der obersten waagrechten Zeile 14 werden die Gärleisten 5 einer vierten Säule 18 zugeführt, deren Gärleisten 5 sich schrittweise abwärts bewegen. Am unteren Ende der vierten Säule 18 werden die Gärleisten 5 durch eine Transport- und Wendeeinrichtung 19, die hier nur angedeutet ist, aber anhand der Figuren 7, 8 und 9 näher erläutert werden wird, waagrecht abgezogen und über eine Auffangvorrichtung 20 geführt, die im vorliegenden Falle als herausziehbarer Kasten ausgebildet ist. Sobald die letzte gefüllte Gärleiste, hier mit "5a" bezeichnet, über der Auffangvorrichtung 20 angekommen ist, werden alle Gärleisten 5, 5a gleichzeitig gekippt, in die Auffangvorrichtung 20 entleert und wieder aufgerichtet.

Durch die gleiche Transport- und Wendeeinrichtung 19 werden die Gärleisten 5 schrittweise nach rechts bewegt. Sobald wieder eine gefüllte Gärleiste in die Position "5a" gelangt ist, wiederholt sich der Vorgangs des Wendens bzw. Abkippens. Durch die gleiche Transport- und Wendeeinrichtung 19 werden die entleerten Gärleisten 5 einer sich schrittweise abwärtsbewegenden fünften Säule 21 zugeführt und an deren unterem Ende wieder in eine waagrechte Zeile 22 umgesetzt und in dieser in einer Entkeimstation 23 entkeimt und in einer Heizstation 24 getrocknet. Am Ende der Zeile 22 werden die Gärleisten 5 wieder der Beschickungsstation 2 zugeführt, wodurch der Kreislauf der Gärleisten 5 ohne Zwischenlagerung geschlossen ist und der Zyklus sich beliebig oft wiederholt.

Es ist bereits Figur 1 zu entnehmen, daß die Gärleisten 5 durch die Transport- und Wendeeinrichtung 19 im Abstand auseinandergezogen und in diesem auseinandergezogenem Zustand über die Auffangvorrichtung 20 transportiert werden. Am Ende der Einwirkung der Transport- und Wendeeinrichtung 19 werden die Gärleisten 5 wieder lückenlos zusammengeschoben und bilden danach die fünfte Säule 21. Der sogenannte Entnahmebereich 25 wird im vorliegenden Falle durch die Auffangvorrichtung 20 gebildet.

Es ist Figur 1 weiterhin zu entnehmen, daß zwischen der Transport- und Wendeeinrichtung 19 und dem Gärmagazin 8 ein von den Gärleisten 5 U-förmig umfahrener Raum 26 vorhanden ist, in dem sich die Auffangvorrichtung 20 für die abgekippten Teiglinge, die Entkeimungsstation 23 und die Trocknungsstation 24 befinden. Es ist weiterhin zu erkennen, daß die Gärleisten 5 der zweiten Säule 10 seitlich an dem Raum 26 bzw. an der Transport- und Wendeeinrichtung 19 vorbei nach oben geführt werden.

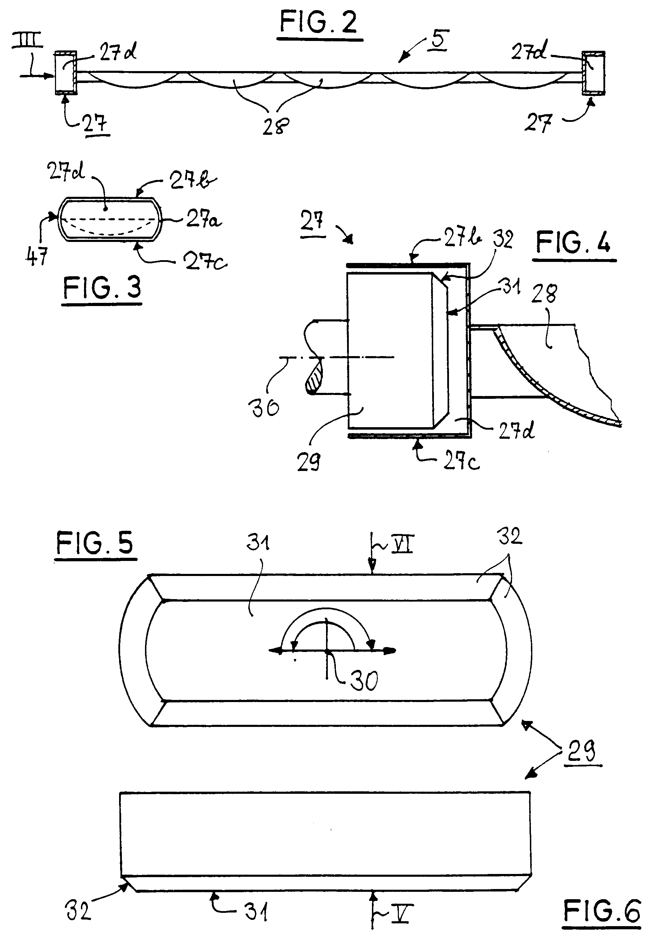

Anhand der Figuren 2, 3 und 4 werden Einzelheiten einer einzelnen Gärleiste 5 näher erläutert. Diese ist einstückig ausgebildet und besteht vorzugsweise aus einem formsteifen und leicht zu reinigenden Kunststoff. An beiden Enden besitzt die Gärleiste 5 als Hohlkörper ausgebildete Führungskörper 27, deren Zarge 27a Figur 3 zu entnehmen ist. Die Oberseite 27b und die Unterseite 27c sind eben ausgebildet, wobei die Oberseite 27b innerhalb eines Stapels als Stützfläche dient und die Unterseite 27c sowohl als Stützfläche als auch als Gleitfläche auf Führungsschienen, deren Verlauf sich aus Figur 1 und aus einem Teil der nachfolgenden Figuren ergibt. Die Gärleisten 5 besitzen im vorliegenden Fall fünf napfförmige Vertiefungen 28 für die gleichzeitige Aufnahme von fünf Teiglingen, die hier jedoch nicht dargestellt sind. Der Hohlraum 27d innerhalb der Führungskörper 27 dient zur Aufnahme einer Greifbacke 29 mit einer Drehachse 30. Der Umriß der Greifbacke 29 ist dabei unter Berücksichtigung eines ausreichenden Spiels komplementär zum Hohlraum 27d in den Führungskörpern 27. Zum Zwecke einer leichten Einführbarkeit ist die Stirnseite 31 mit einer deutlichen Anfasung 32 versehen, die sich über den gesamten Umfang der Greifbacke 29 erstreckt.

Wie sich aus den Figuren 7, 8 und 9 ergibt, besitzt die Transport- und Wendeeinrichtung 19 zwei parallele Reihenanordnungen 33 und 34 von aufeinander zu gerichteten Greifbacken 29, deren Drehachsen 30 in einem Rastermaß "R" angeordnet sind und mittels einer Antriebseinheit 35 in die komplementären Führungskörper 27 der Gärleisten 5 einschiebbar sind. Mittels jeweils eines Drehantriebs 36 sind die Greifbacken 29 und damit die Gärleisten 5 gemeinsam um die quer zur Transportrichtung verlaufenden Drehachsen 30 drehbar, und zwar auf beiden Seiten absolut synchron. Dabei können entweder für jede Greifbacke 29 einzelne Antriebe vorgesehen werden, oder es kann eine Koppelung über Ritzel und Zahnriemen oder Zahnstangen vorgesehen werden. Die Drehantriebe 36 sind daher in Figur 8 nur sehr schematisch dargestellt. Wie vergleichsweise Figur 9 zu entnehmen ist, ist das Rastermaß "R" größer als der minimale Achsabstand "D" zweier benachbarter Gärleisten 5. Daraus ergibt sich im Bereich der Transport- und Wendeeinrichtung 19 ein paralleler Abstand "d" (Figur 8). Wie weiterhin Figur 8 zu entnehmen ist, ist die Antriebseinheit 35 für die Greifbacken 29 auf einer ortsfesten Horizontalführung 37 angeordnet, die ihrerseits zwei entgegengesetzt wirkende Einzelantriebe 38 und 39 aufweist, an denen waagrechte Tragschienen 40 und 41 mit Drehlagern 42 für die Greifbacken 29 angeordnet sind. Auf der Horizontalführung 37 ist die Antriebseinheit 35 in Richtung des Doppelpfeils 35a in Schrittlängen entsprechend dem Rastermaß "R" in Transportrichtung hin und her bewegbar.

Wie sich speziell aus den Figuren 7 und 8 ergibt, sind unterhalb der Greifbacken 29 zwei waagrechte Gleitschienen 43 und 44 für die Auflage der Führungskörper 27 angeordnet, und die Gleitschienen 43 und 44 sind zur Ausführung der Drehbewegung der Gärleisten 5 mittels der Hubzylinder 46 vorübergehend um ein Maß "H" absenkbar, das die Drehbewegung der Gärleisten 5 ermöglicht. Wie sich wiederum aus Figur 8 ergibt, sind die Einzelantriebe 38 und 39 starr mit den Tragschienen 40 und 41 verbunden, was hier jedoch nur durch gestrichelte Linien angedeutet ist.

Der Bewegungsablauf der Einrichtung nach den Figuren 7 bis 9 ist folgender: Die Transport- und Wendeeinrichtung 19 wird zunächst mit gespreizten Greifbacken 29 in die äußerste Stellung nach links verfahren, und daraufhin werden die vordersten Greifbacken 29 in die unterste Gärleiste der Säule 4 eingeschoben. Danach werden die Reihenanordnungen 33 und 34 um das Rastermaß "R" nach rechts verschoben, und die Greifbacken 29 werden wieder aus den Führungskörpern 27 zurückgezogen. Daraufhin werden die Reihenanordnungen 33 und 34 wieder in die äußerste Stellung nach links verschoben, worauf sich das Spiel wiederholt. Bei der erstmaligen Inbetriebnahme werden so nach und nach alle Paare von Greifbacken 29 mit Gärleisten 5 besetzt. Innerhalb des laufenden Betriebes sind natürlich sämtliche Paare von Greifbacken 29 mit Gärleisten 5 besetzt. Sobald die erste gefüllte Gärleiste in die Position 5a (Figur 1) gelangt ist - dies ist im vorliegenden Fall nach neun Bewegungszyklen der Fall - werden die Gleitschienen 43 und 44 in die in Figur 7 dargestellte Position abgesenkt, so daß nunmehr die Gärleisten gedreht werden können. Durch die vorstehend beschriebene Koppelung erfolgt ein Abkippen aller Teiglinge gleichzeitig. Nach einer Drehung von 180 Grad und wieder zurück werden die Gleitschienen 43 und 44 wieder angehoben, und erst jetzt werden die Paare von Greifbacken 29 aus den Führungskörpern 27 zurückgezogen.

Aus Figur 10 geht in Verbindung mit Figur 3 hervor, daß die Seitenflächen der Führungskörper 27 mit starken Abrundungen 47 versehen sind, durch die ein Verkanten der Gärleisten verhindert und deren Einfädeln erleichtert wird. Figur 10 zeigt einen solchen Vorgang, bei dem Verkantungen auftreten können, nämlich beim Umsetzen von Gärleisten 5 aus der ersten Säule 4 in die waagrechte Zeile 7 des Gärmagazins 8.

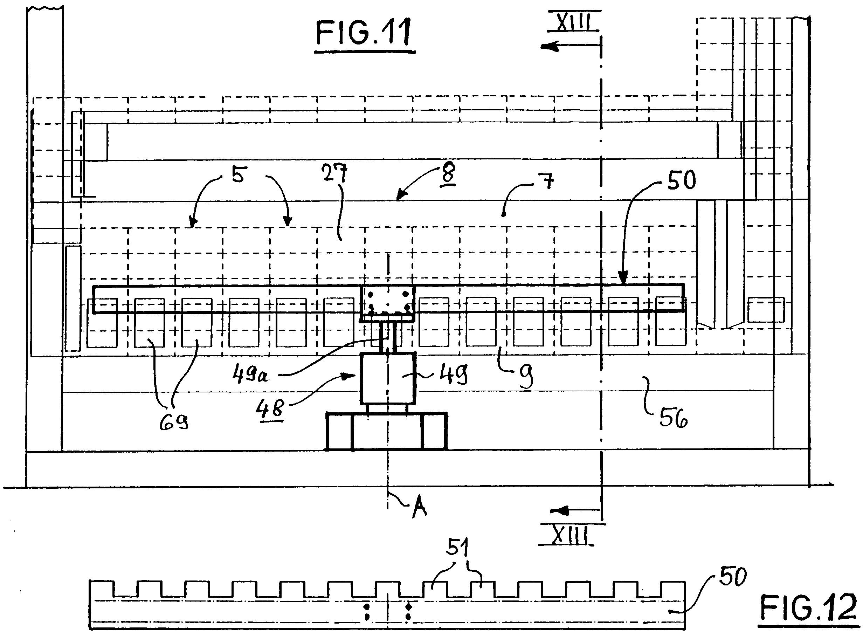

Figur 11 zeigt den unteren Teil von Figur 1 mit dem Gärmagazin 8 und mit einer Hub- und Absenkeinrichtung 48, von denen zwei in spiegelsymmetrischer Anordnung an beiden Längsseiten des Gärmagazins 8 angeordnet sind und mit der jeweils vorletzten Zeile der Gärleisten 5 in Eingriff gebracht werden können. Zur Hub- und Absenkeinrichtung 48, die in fett ausgezogenen Linien dargestellt ist, gehört ein Pneumatikzylinder 49 mit einer senkrechten Achse A und einer Kolbenstange 49a, die mittelbar mit einem Halterechen 50 in Verbindung steht, der Zinken 51 aufweist, die in Figur 12 anhand der Blechabwicklung des Halterechens 50 gezeigt sind. Die geometrische Ausbildung und Anordnung der Zinken 51 ist dabei so getroffen, daß jeder Zinken 51 mit einem Führungskörper 27 einer Gärleiste 5 zum Eingriff gebracht werden kann, wenn diese Gärleisten 5 in der betreffenden Zeile lückenlos aneinandergereiht sind.

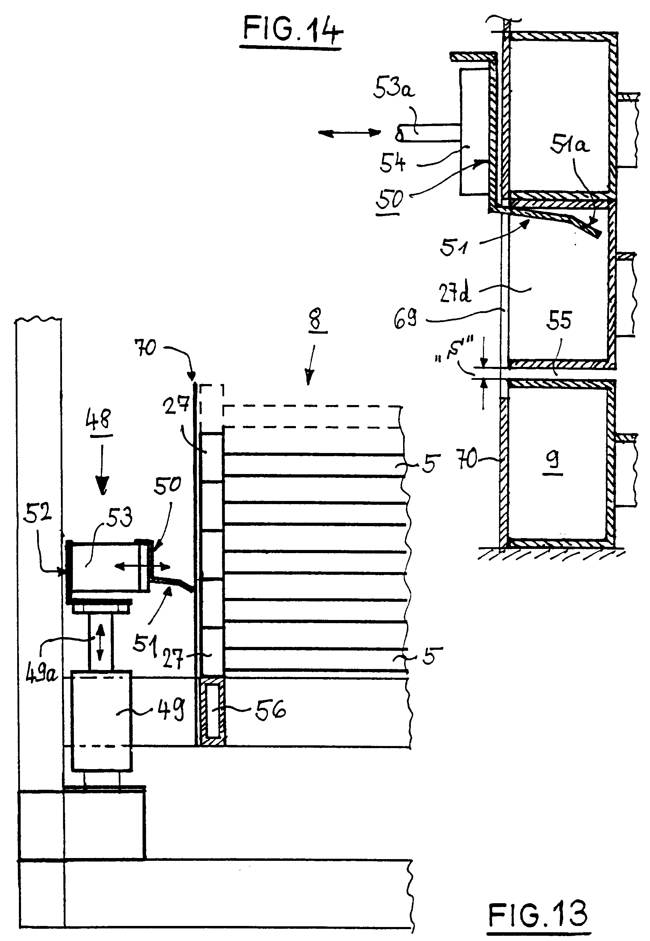

Gemäß Figur 13 ist auf dem oberen Ende der Kolbenstange 49a ein Winkelstück 52 angeordnet, dessen senkrechter Schenkel einen weiteren Pneumatikzylinder 53 mit waagrechter Betätigungsrichtung trägt. An der Kolbenstange 53a dieses Pneumatikzylinders ist über eine Flanschplatte 54 der Halterechen 50 befestigt, wie dies in Figur 14 dargestellt ist. Der Halterechen 50 ist im wesentlichen Z-förmig ausgebildet, und die Zinken 51 sind in Richtung auf ihre freien Enden mit abwärts gerichteten Schrägflächen 51a versehen.

Die Wirkungsweise der Hub- und Absenkeinrichtung 48 ist folgende: Figur 13 zeigt den Halterechen 50 außer Eingriff mit der vorletzten Zeile des Gärleistenstapels. Durch Betätigung des Pneumatikzylinders 53 wird dessen Kolbenstange 53a ausgefahren, und der Halterechen 50 greift mit seinen Zinken 51 in die Hohlräume 27d und unter die oberen Ränder der Zarge 27a der Führungskörper 27 (siehe auch Figur 3). Die Schrägflächen 51a begünstigen das Einschieben der Zinken 51, und durch den weiterhin schrägen Verlauf der Zinken 51 wird die vorletzte Zeile an Gärleisten zusammen mit dem gesamten darüberliegenden Stapel um ein Maß "s" angehoben, d.h. zwischen der vorletzten Zeile und der letzten Zeile 9 wird ein Spalt 55 gebildet (Figur 14). Dadurch ist es möglich, die unterste Zeile 9 unbelastet durch die oberen Zeilen und daher weitgehend reibungsfrei schrittweise auszuschieben, wie dies bereits anhand der Figur 1 erläutert wurde und anhand der Figuren 15 und 16 noch weiter ergänzt wird. Nachdem die untere Zeile 9 restlos ausgeschoben und in die zweite Säule 10 umgesetzt worden ist, wird die Kolbenstange 49a und damit der Halterechen 50 soweit abgesenkt, bis die vorletzte Zeile zur letzten Zeile wird und mittels der Führungskörper 27 auf einer Gleitschiene 56 aufsitzt, die sich über die gesamte Länge der Gärkammer 1 erstreckt (Figur 11). Die Vorgänge wiederholen sich spiegelsymmetrisch auch an den anderen Enden der Gärleisten 5.

In den Figuren 15 und 16 ist wiederum der untere Teil der Gärkammer 1 mit dem Gärmagazin 8 dargestellt. Unterhalb der untersten Zeile 9 des Gärleistenpakets befindet sich eine waagrecht wirkende Vorschubeinrichtung 57 für den schrittweisen Transport der jeweils untersten Zeile 9 der Gärleisten 5, die einzeln unter die zweite Säule 10 von Gärleisten 5 geschoben werden. Die Vorschubeinrichtung 57 besitzt einen Mitnehmer 58, der in die unterste Zeile 9 der Gärleisten 5 eingreift und an einem Schlitten 59 befestigt ist, der durch einen kolbenstangenlosen Bandzylinder 60 angetrieben wird. Dadurch können die Gärleisten 5 der untersten Zeile 9 schrittweise nach rechts und an das untere Ende der zweiten Säule 10 transportiert werden. In Figur 15 ist rechts gestrichelt die letzte Stellung des Schlittens 59 gezeigt, der aus dieser Position wieder nach links verfahren werden kann. Der Vorgang des Umsetzens der Gärleisten der untersten Zeile 9 in die zweite Säule 10 wird nachstehend anhand der Figuren 17, 18 und 19 näher erläutert.

Gemäß Figur 17 ist am Ende des Gärmagazins 8 eine Vertikalführung 61 für die Säule 10 angeordnet, unterhalb welcher der Hubantrieb 11 (siehe auch Figur 1) angeordnet ist. Dieser Hubantrieb 11 besitzt einen Hub, der der Höhe "h" eines Führungskörpers 27 entspricht, d.h. gleich oder geringfügig größer ist als die Höhe "h", und durch den ein schrittweises Anheben der Gärleisten 5 der Säule 10 durchführbar ist. Zu diesem Hubantrieb gehört ein Pneumatikzylinder 62 mit einer Kolbenstange 62a, die an ihrem oberen Ende eine waagrechte Stützleiste 63 trägt. Zwei Führungsstangen 62b dienen als Verdrehsicherung. Diese Stützleiste 63 reicht bis zu den beiderseitigen Führungskörpern 27. Damit sich die Säule 10 beim Absenken der Stützleiste 13 nicht gleichfalls abwärts bewegt, ist beiderseits des Hubantriebs 11 je eine Halteeinrichtung 64 für die jeweils unterste Gärleiste 5 der Säule 10 angeordnet. Diese Halteeinrichtung 64 ist in Figur 18 durch zwei Pfeile angedeutet und in Figur 19 dargestellt. Danach besitzt jede Halteeinrichtung 64 einen waagrecht wirkenden Pneumatikzylinder 65 mit einer Kolbenstange 65a, an deren Ende mindestens eine Rolle 66 für den vorübergehenden Eingriff in den Führungskörper 27 der Gärleiste 5 angeordnet ist. Sobald der Hubantrieb 11 die unterste Gärleiste 5 in eine Position nach den Figuren 17 und 18 gebracht hat, wird die Kolbenstange 65a mit den Rollen 66 in den Hohlraum des Führungskörpers 27 eingefahren. Es versteht sich, daß sich am gegenüberliegenden Ende der jeweiligen Gärleiste 5 spiegelsymmetrisch der gleiche Vorgang vollzieht, wie er anhand von Figur 19 beschrieben wurde.

Nachdem die Säule 10 auf diese Weise auf beiden Seiten zuverlässig abgestützt ist, wird die Stützleiste 63 mittels des Pneumatikzylinders 62 wieder abgesenkt, und zwar bis geringfügig unterhalb der Gleitflächen der Gleitschienen 56 (Figur 18), so daß nunmehr eine weitere Gärleiste 5 am unteren Ende der Säule 10 eingeschoben werden kann. Bevor der Pneumatikzylinder 62 wieder den bereits beschriebenen Hub ausführt, werden die Rollen 66 aus den Führungskörpern 27 herausgezogen, und die gesamte Säule 10 wird um ein entsprechendes Maß angehoben. Sobald die Vorschubeinrichtung 57 die letzte Gärleiste aus der unteren Zeile 9 entfernt hat, senkt die Hub- und Absenkeinrichtung 48 das gesamte Gärleistenpaket ab, wie dies anhand der Figuren 12, 13 und 14 bereits erläutert wurde. Die gleichzeitige Absenkung sämtlicher im Gärmagazin 8 befindlicher Gärleisten 5 ist im unteren Teil von Figur 1 durch die senkrechten Pfeile angedeutet. Bis zu diesem Absenken wurde das Paket aus Gärleisten 5 von der Hub- und Absenkeinrichtung 48 gemäß den Figuren 11 und 14 gehalten.

Für den Eingriff der Zinken 51 des Halterechens 50 in die Führungskörper 27 sind Fenster 69 vorgesehen, die in Seitenwänden 70 des Gärmagazins 8 angeordnet sind (Figuren 11, 14, 15, 17). Für den Eingriff der Rolle(n) 66 in die Führungskörper 27 sind analoge Fenster 71 vorgesehen (Figuren 17 und 19).

Für die Steuerung sämtlicher Antriebe ist eine zentrale Steuereinrichtung vorgesehen, die jedoch nicht näher dargestellt ist. Ihre Funktion ergibt sich aus dem weiter oben beschriebenen Betriebsverfahren.

In Figur 20 sind die oberen Enden der zweiten Säule 10 und der dritten Säule 13 zusammen mit ihren Bewegungsrichtungen gezeigt. Die bereits anhand von Figur 1 im Wirkungsprinzip erläuterte Horizontal-Verschiebeeinrichtung 12 besteht aus einem Pneumatikzylinder 67 mit einer Kolbenstange 67a und einem Mitnehmer 68, der zwischen der ausgezogenen und der gestrichelten Stellung verschiebbar ist. Dadurch läßt sich die jeweils oberste Gärleiste 5 der Säule 10 nach links an das obere Ende der Säule 13 verschieben, wodurch die Bewegungsrichtung gemäß den beiden senkrechten Pfeilen umgekehrt wird. Sobald die oberste Gärleiste 5 nach links verschoben wurde, wird der Mitnehmer 68 wieder aus der ausgezogenen Position in die gestrichelt dargestellte Position bewegt, und die Säule 10 kann um die Höhe einer Gärleiste nach oben verschoben werden, so daß der Verschiebevorgang wiederholt werden kann. Der weitere Weg der Gärleisten wurde bereits anhand der vorausgegangenen Figuren beschrieben.

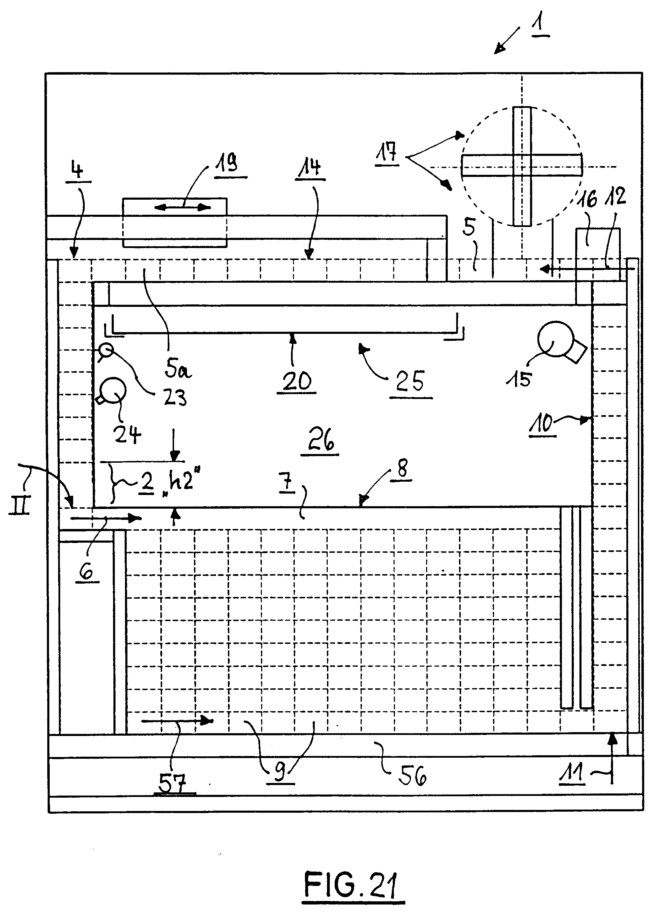

Figur 21 zeigt eine gegenüber Figur 1 vereinfachte Ausführungsform der Erfindung unter Beibehaltung der bisherigen Bezugszeichen: Hierbei sind die Formstationen 17 und die Transport- und Wendeeinrichtung 19 der gleichen obersten Zeile 14 der Gärleisten 5 zugeordnet. Unterhalb des Mehlers 16 werden die Gärleisten 5 der Säule 10 durch eine Horizontal-Verschiebeeinrichtung 12 analog Figur 20 in die oberste Zeile 14 umgesetzt und zunächst durch die Formstation 17 geführt. Durch die Transport- und Wendeeinrichtung 19, die derjenigen nach den Figuren 4 bis 9 entspricht, jedoch in umgekehrter Richtung fördert, nämlich von rechts nach links, werden die Gärleisten 5 nacheinander aus der Formstation 17 herausgezogen und schrittweise, gegebenenfalls unter Vereinzelung, der linken Säule 4 zugeführt. Sobald eine gefüllte Gärleiste die Position der Gärleiste 5a erreicht, werden alle über der Auffangvorrichtung 20 befindlichen Gärleisten 5 und 5a gemeinsam durch Verschwenken der Gärleisten um jeweils 180 Grad in entgegengesetzten Richtungen entleert. Danach werden die Gärleisten wieder zusammengeschoben und an das obere Ende der linken Säule 4 abgegeben und von dort schrittweise bis zur Beschickungsstation 2 abgesenkt, in der ein vertikaler Abstand "h2" zwischen jeweils zwei Gärleisten erzeugt wird. Nach dem Füllen jeweils einer Gärleiste 5 werden diese schrittweise an das Gärmagazin 8 abgegeben. Die Entkeimstation 23 und die Heizstation 24 sind in diesem Falle der Säule 4 zugeordnet, während der Lüfter 15 der gegenüberliegenden Säule 10 zugeordnet ist. Alle übrigen Einrichtungen entsprechen denjenigen nach den Figuren 10 bis 19.

Durch diese Bauweise entfallen gegenüber Figur 1 zwei Zeilen und eine Säule, nämlich die Säule 21. Die Zahl der horizontal wirkenden Pneumatikantriebe wird dadurch um 30 % und die Gesamtlänge der Führungsbahnen um 50 % verringert. Entsprechend stark verringert sich auch das Bauvolumen der gesamten Gärkammer.

## Patentansprüche

1. Gärkammer (1) mit einer Gärzone zum Vorgären mit gestapelten Gärleisten (5, 5a) für die Aufnahme von Teiglingen, insbesondere für die Herstellung von Brötchen, mit Einrichtungen für den kettenlosen, taktweisen Transport der Gärleisten (5, 5a) in horizontalen und vertikalen Richtungen, mit einer Beschickungsstation (2), einem Garmagazin (8) für mehrere Zeilen und Säulen von Garleisten (5, 5a), einer Formstation (17), einer Wendestation und einem Entnahmebereich (25) für die Teiglinge, **dadurch gekennzeichnet**, daß
a) der Entnahmebereich (25) innerhalb der Gärkammer (1) angeordnet ist,
b) dem Entnahmebereich (25) eine Transport- und Wendeeinrichtung (19) für den gleichzeitigen Horizontaltransport und das gleichzeitige Wenden mehrerer Gärleisten (5, 5a) zugeordnet ist,
c) unterhalb der Transport- und Wendeeinrichtung (19) eine Auffangvorrichtung (20) für die gleichzeitige Ablage mehrerer Reihen von Teiglingen angeordnet ist,
d) die Transport- und Wendeeinrichtung (19) zwei parallele Reihenanordnungen (33, 34) von aufeinander zu gerichteten Greifbacken (29) aufweist, die in einem Rastermaß (R) angeordnet und mittels einer Antriebseinheit (35) formschlüssig mit den Enden der Gärleisten (5, 5a) verbindbar und mittels eines Drehantriebs (36) gemeinsam mit den Gärleisten (5) um quer zur Transportrichtung verlaufende Drehachsen (30) drehbar sind, und daß
e) die Reihenanordnungen (33, 34) von Greifbacken (29) durch die Antriebseinheit (35) zum schrittweisen Transport der Gärleisten gemeinsam um dem Rastermaß entsprechende Schrittlängen in Transportrichtung hin und her bewegbar sind.

2. Gärkammer nach Anspruch 1, **dadurch gekennzeichnet**, daß die Greifbacken (29) horizontal in komplementäre Führungskörper (27) an den Enden der Gärleisten (5) einschiebbar sind.

3. Gärkammer nach Anspruch 1, **dadurch gekennzeichnet**, daß das Rastermaß (R) größer ist als der minimale Achsabstand (D) zweier benachbarter Gärleisten (5, 5a).

4. Gärkammer nach Anspruch 1, **dadurch gekennzeichnet**, daß die Antriebseinheit (35) für die Greifbacken (29) auf einer ortsfesten Horizontalführung (37) angeordnet ist und ihrerseits zwei entgegengesetzt wirkende Einzelantriebe (38, 39) aufweist, an denen waagrechte Tragschienen (40, 41) mit Drehlagern (42) für die Greifbacken (29) angeordnet sind.

5. Gärkammer nach Anspruch 1, **dadurch gekennzeichnet**, daß unterhalb der Greifbacken (29) zwei waagrechte Gleitschienen (43, 44) für die Auflage der Gärleisten (5, 5a) angeordnet sind, und daß die Gleitschienen (43, 44) zur Ausführung der Drehbewegung der Gärleisten (5, 5a) vorübergehend um ein Maß (H) absenkbar sind, das die Drehbewegung der Gärleisten ermöglicht.

6. Gärkammer nach Anspruch 1, **dadurch gekennzeichnet**, daß unterhalb der Transport- und Wendeeinrichtung (19) ein Gärmagazin (8) für mehrere Zeilen und Säulen von Gärleisten (5, 5a) angeordnet ist.

7. Gärkammer nach Anspruch 1, **dadurch gekennzeichnet**, daß an beiden Längsseiten des Gärmagazins (8) je eine Hub- und Absenkeinrichtung (48) für den Eingriff in die jeweils vorletzte Zeile der Gärleisten (5) angeordnet ist.

8. Gärkammer nach Anspruch 7, **dadurch gekennzeichnet**, daß jede Hub- und Absenkeinrichtung (48) einen Halterechen (50) mit Zinken (51) aufweist, die in alle Gärleisten (5) der betreffenden Zeile einschiebbar sind.

9. Gärkammer nach Anspruch 8, **dadurch gekennzeichnet**, daß die Halterechen (50) im Querschnitt Z-förmig ausgebildet sind.

10. Gärkammer nach Anspruch 8, **dadurch gekennzeichnet**, daß die Zinken (51) in Richtung auf ihre freien Enden mit abwärtsgerichteten Schrägflächen (51a) versehen sind.

11. Gärkammer nach Anspruch 1, **dadurch gekennzeichnet**, daß unterhalb des Gärmagazins (8) eine waagrecht wirkende Vorschubeinrichtung (57) für den schrittweisen Transport der jeweils untersten Zeile (9) der Gärleisten (5) unter eine Säule (10) von Gärleisten (5) angeordnet ist.

12. Gärkammer nach Anspruch 11, **dadurch gekennzeichnet**, daß die Vorschubeinrichtung (57) einen Mitnehmer (58) aufweist, der in die unterste Zeile (9) der Gärleisten (5) eingreift und an einem Schlitten (59) befestigt ist, der Teil eines kolbenstangenlosen Bandzylinders (60) ist.

13. Gärkammer nach Anspruch 1, **dadurch gekennzeichnet**, daß am Ende des Gärmagazins (8) eine Vertikalführung (61) für eine Säule (10) von Gärleisten (5) angeordnet ist, unterhalb welcher ein Hubantrieb (11) mit einem Hub angeordnet ist, der der Höhe (H) eines Führungskörpers (27) entspricht, und durch den ein schrittweises Anheben der Säule (10) durchführbar ist.

14. Gärkammer nach Anspruch 13, **dadurch gekennzeichnet**, daß beiderseits des Hubantriebs (11) je eine Halteeinrichtung (64) für die jeweils unterste Gärleiste (5) der Säule (10) angeordnet ist.

15. Gärkammer nach Anspruch 14, **dadurch gekennzeichnet**, daß die Halteeinrichtung (64) einen waagrecht wirkenden Pneumatikzylinder (65) aufweist, an dessen Kolbenstange (65a) mindestens eine Rolle (66) für den vorübergehenden Eingriff in den Führungskörper (27) der Gärleiste (5) angeordnet ist.

16. Gärkammer nach Anspruch 1, **dadurch gekennzeichnet**, daß zwischen der Transport- und Wendeeinrichtung (19) und dem Gärmagazin (8) ein von den Gärleisten (5, 5a) U-förmig umfahrener Raum (26) vorhanden ist, in dem sich die Auffangvorrichtung (20) für die abgekippten Teiglinge, eine Entkeimungsstation (23) und eine Trocknungsstation (24) befinden.

17. Gärkammer nach Anspruch 1, **dadurch gekennzeichnet**, daß unterhalb der Transport- und Wendeeinrichtung (19) ein Gärmagazin (8) für mehrere Zeilen und Säulen von Gärleisten (5) angeordnet ist, daß unterhalb des Gärmagazins (8) eine waagrecht wirkende Vorschubeinrichtung (57) für den schrittweisen Transport der jeweils untersten Zeile (9) der Gärleisten (5) unter eine Säule (10) von Gärleisten (5) angeordnet ist, daß die Gärleisten (5) am oberen Ende der besagten Säule (10) in eine oberste waagrechte Zeile (14) umsetzbar sind, in der sie zuerst der Formstation (17) und anschließend der Transport- und Wendeeinrichtung (19) zuführbar sind, an deren Ende sie wiederum einer weiteren Säule (4) zuführbar sind, an die sich in Transportrichtung die Beschickungsstation (2) und das Gärmagazin (8) anschließen.

18. Betriebsverfahren für die Gärkammer nach Anspruch 1, **dadurch gekennzeichnet**, daß
a) Reihen von Teiglingen in der Beschickungsstation (2) in eine jeweils oberste Gärleiste (5) eingegeben werden,
b) die gefüllten Gärleisten (5) nacheinander dem Gärmagazin (8) zugeführt und in diesem zeilenweise gestapelt werden,
c) der Inhalt des Gärmagazins (8) zeilenweise abgesenkt wird,
d) die jeweils unterste Zeile (9) der Gärleisten (5) schrittweise dem unteren Ende einer Säule (10) von Gärleisten (5) zugeführt wird,
e) die besagte Säule (10) schrittweise angehoben und seitlich an der Transport- und Wendeeinrichtung (19) vorbei nach oben geführt wird,
f) die Gärleisten (5) in eine obere waagrechte Zeile (14) umgesetzt werden und innerhalb dieser Zeile (14) unter einer Formstation (17) hindurchgeführt werden,
g) die Gärleisten (5) durch die Transport- und Wendeeinrichtung (19) waagrecht abgezogen und über die Auffangvorrichtung (20) geführt werden,
h) die über der Auffangvorrichtung (20) befindlichen Gärleisten (5, 5a) gleichzeitig gekippt, entleert und wieder aufgerichtet werden, und
i) die entleerten Gärleisten (5) zunächst einer sich schrittweise abwärts bewegenden weiteren senkrechten Säule (4) zugeführt und an deren unterem Ende wieder der Beschickungsstation (2) und danach dem Gärmagazin (8) zugeführt werden.

19. Betriebsverfahren nach Anspruch 18, **dadurch gekennzeichnet**, daß die Gärleisten (5, 5a) durch die Transport- und Wendeeinrichtung (19) im Abstand auseinandergezogen und in diesem Zustand über die Auffangvorrichtung (20) transportiert gedreht und entleert und danach wieder bis zur gegenseitigen Berührung zusammengeschoben werden.
